# EUROPÄISCHE PATENTANMELDUNG

(11) **EP 3 611 534 A1**
(43) Veröffentlichungstag der Anmeldung: **19.02.2020**
(21) Anmeldenummer: 19174398.8
(22) Anmeldetag: 14.05.2019
(51) Int. Cl.: G01S 7/486, G01S 7/497, G01S 17/89

(54) **VERFAHREN ZUR KALIBRIERUNG EINER TIME-OF-FLIGHT-KAMERA**

(30) Priorität: 09.08.2018 DE 102018119435
(71) Anmelder: Huf Hülsbeck & Fürst GmbH & Co. KG, 42551 Velbert (DE)
(72) Erfinder: MÜLLER, Oliver, 42549 Velbert (DE)
(74) Vertreter: Zenz Patentanwälte Partnerschaft mbB

(57) **Zusammenfassung**

Ein Verfahren zum Betrieb einer Time-Of-Flight-Kamera, bei deren Betrieb ein von einer Beleuchtungseinheit abgegebener Lichtpuls in der Umgebung der Time-of-Flight Kamera reflektiert wird und in einem Pixelarray erfasst wird. Von der Lichtlaufzeit abhängige Signale werden im Pixelarray erfasst, um raumaufgelöste Abstandsinformationen zu ermitteln.

Zu Kalibrierung werden zwei TOF-Aufnahmen innerhalb einer vorgegebenen Kalibrierungsdauer aufgenommen, wobei die TOF-Aufnahmen mit jeweils unterschiedlicher Synchronisation der Beleuchtungseinheit und des Pixelarrays derart erfolgen, dass der zeitliche Abstand zwischen der Aussendung des Lichtpulses und der Erfassung um eine vorgegebene erste Verzögerungsdauer verschieden ist, so dass der ersten Verzögerungsdauer entsprechende unterschiedliche Lichtlaufzeiten simuliert werden.

Die wenigstens zwei TOF-Aufnahmen und die erste Verzögerungsdauer werden verwendet, um für wenigstens einen Teil der Pixel des Pixelarrays jeweils einen lichtlaufzeitabhängigen Korrekturfaktor zu berechnen.

## Beschreibung

Die Anmeldung betrifft ein Verfahren zum Betrieb einer Time-Of-Flight-Kamera. Insbesondere betrifft die Anmeldung ein Verfahren zur Kalibrierung einer Time-Of-Flight (TOF)-Kamera.

TOF-Kameras sind optische Erfassungseinrichtungen, welche mit einem Pixelarray neben Information zur Lichtintensität auf jedem Pixel auch Informationen zur Lichtlaufzeit an den Pixeln erfassen. Diese auch als dreidimensionale (3D) Kameras bezeichneten Geräte erfassen über die Lichtlaufzeit Entfernungsinformationen von Objekten in aufgenommenen Szenerien.

Derartige Geräte sind beispielsweise aus der EP 2 593 810 B1 oder EP 3 015 881 A1 bekannt, ebenso wie aus den darin referenzierten Dokumenten.

Eine TOF-Kamera sendet entsprechen ihrem funktionalen Grundprinzip optische Strahlungsenergie aus und erfasst, wie lang es dauert, bis zumindest ein Teil dieser Energie von einem Zielobjekt reflektiert wird und zurück zu dem Erfassungssensor der TOF-Kamera gelangt. Objekte in einem größeren Abstand- und damit korrespondierender längerer Lichtstrecke führen zu einer größeren Verzögerung der im Kamerasensor erfassten Signale als Objekte in geringerem Abstand.

TOF-Kameras enthalten zur Detektion ein sensitives Pixelarray, welches auf die Strahlung der zugehörigen Beleuchtungsquelle der Kamera abgestimmt ist. Die einzelnen Pixel des Pixelarrays weisen jeweilige zugeordnete Schaltungselemente auf, um die in dem Pixel zu einem Signal gehörigen generierten elektrischen Ladungsmengen zu erfassen. Es sind elektronische Shutter für die Kontrolle der Belichtungszeiten und -dauern vorgesehen. Durch diese Shutter ist es möglich, die in einem Pixel in einem gewünschten Zeitbereich erfasste Ladungsmenge (korrespondierend zur empfangenen Lichtmenge) auszuwerten. Durch den Vergleich von Ladungsmengen in unterschiedlichen Zeitbereichen kann dann auf eine Laufzeitinformation rückgeschlossen werden.

Angesichts der äußerst geringen Zeitdauern im Bereich von Bruchteilen von Nanosekunden bis einigen hundert Nanosekunden, die bei der Laufzeitauswertung berücksichtigt werden können, spielen selbst geringste Abweichungen bei Leitungslängen der Pixel und Shutter sowie der gesamten Timingkomponenten eine Rolle. Dies führt unter anderem dazu, dass ein Pixelarray zur Kompensation von Laufzeitabhängigen Sensitivitätsänderungen jedes Pixels kalibriert werden muss. Dabei werden der TOF-Kamera Objekte in unterschiedlichen Abständen angeboten werden, wobei für jeden Abstand eine Aufnahme erstellt wird. Wird die TOF-Kamera zunächst auf eine Wand in einem ersten Abstand und anschließend auf dieselbe Wand in einem zweiten Abstand gerichtet, so kann durch Vergleich dieser unterschiedlichen Abstände ein Korrekturfaktor für jedes Pixel des Pixelarrays berechnet werden. Der Korrekturfaktor kann für jedes der Pixel gespeichert werden. Es wird bei späteren Messungen mit diesem pixelspezifischen Faktor kompensiert, dass die Pixel des Pixelarrays sich für unterschiedliche Lichtlaufzeiten mit unterschiedlichen Sensitivitäten der Lichtlaufzeiten verhalten, was insbesondere an unterschiedlichen Verhalten und Leitungslängen der elektronischen Shutter liegt. Die Kompensation unter Verwendung des gespeicherten Faktors kann in dem Controller oder einer Verarbeitungseinheit für die Signale erfolgen.

Aufgabe der Erfindung ist es, ein verbessertes Kalibrierverfahren für TOF-Kameras zur Verfügung zu stellen.

Die Aufgabe wird gelöst durch ein Verfahren zum Betrieb einer Time-of-Flight-Kamera mit den Merkmalen des Patentanspruches 1.

Gemäß der Erfindung wird das Verfahren mit einer TOF-Kamera der strukturell bekannten Art ausgeführt. Eine solche Kamera verfügt über wenigstens eine Beleuchtungseinheit (beispielsweise einer Laserdiode oder LED) die ansteuerbar ist, um Lichtpulse auszusenden. Außerdem ist als Bestandteil der TOF-Kamera ein sensitives Pixelarray zur Signalerfassung vorgesehen, welches ggf. mit einer Optik ausgestattet ist und für Lichtpulse der Beleuchtungseinheit sensitiv ist. Ein Controller (vollständig integriert oder mit mehreren Komponenten) ist sowohl mit der Beleuchtungseinheit gekoppelt als auch mit dem sensitiven Pixelarray. Der Controller synchronisiert und koordiniert die Aktivität sowohl der Beleuchtungseinheit als auch des Pixelarrays, er liefert also Ansteuerungssignale gemäß einem vorgegebenen Timing, um Bilder mit Tiefeninformationen auf dem Pixelarray zu erfassen. Dabei synchronisiert der Controller das Verhalten der Beleuchtungseinrichtung mit dem Pixelarray, er steuert also Pixelarray und Beleuchtungseinheit in vorgegebener zeitlicher Synchronisation, insbesondere mit vorgegebener Verzögerung bzw. vorgegebenem Vorlauf an. Die Ansteuerung des Pixelarrays und der Beleuchtungseinheit für eine einzige Aufnahme der TOF-Kamera erfolgt im Rahmen der Erfindung im Wesentlichen in der bekannten Weise. Ein von der Beleuchtungseinheit abgegebener Lichtpuls, der unter Ansteuerung des Controllers zu einem vorgegebenen Zeitpunkt ausgesandt wurde, wird in der Umgebung der TOF-Kamera reflektiert und ein Teil der reflektierten Lichtenergie wird im Pixelarray erfasst. Von der Lichtlaufzeit abhängige Signale werden in den einzelnen Pixeln des Pixelarrays erzeugt. Dabei können die Pixelarrays mit einer Mehrzahl von Shuttern oder einer Mehrzahl von Timing-Ansteuerungen betrieben werden, außerdem kann die Lichtquelle in zeitlicher Koordination und Synchronisation durch den Controller eine Vielzahl von Lichtpulsen ausstrahlen, wobei zu jedem der Lichtpulse mit einer koordinierten Schaltung der Shutter unterschiedliche Zeitfenster der Lichtlaufzeit ausgewertet werden und ggf. Ladungen in den Pixeln oder diesen jeweils zugeordneten Ladungsspeichern akkumuliert werden.

Bei der so bezeichneten Art der Erstellung einer TOF-Aufnahme mit einer TOF-Kamera wird grundsätzliche die zeitliche Synchronisation konstant gehalten, um eine Lichtlaufzeit in eine konkrete Distanz umrechnen zu können.

Erfindungsgemäß wird die Kalibrierung durchgeführt, indem dieselbe Szene in demselben Abstand mit mehreren TOF-Aufnahmen abgebildet wird, wobei jedoch durch die Veränderung der zeitlichen Synchronisation eine verlängerte oder verkürzte Lichtlaufzeit simuliert wird und damit ein größerer oder kleinerer Abstand simuliert wird. Zwischen den TOF-Aufnahmen wird also der zeitliche Abstand der Beleuchtung der Szenerie gegenüber der Detektion verändert. Dazu kann der Controller beispielsweise eine zusätzliche erste Verzögerungsdauer bei der Aktivierung der Beleuchtungseinrichtung hinzufügen oder die Ansteuerung der Shutter verändern.

Erfindungsgemäß werden wenigstens zwei TOF-Aufnahmen innerhalb einer vorgegebenen Kalibrierungsdauer erstellt, wobei die TOF-Aufnahmen mit jeweils unterschiedlicher Synchronisation der Beleuchtungseinheit und des Pixelarrays derart erfolgen, dass der zeitliche Abstand zwischen der Aussendung des Lichtpulses und den vorgegebenen Zeitabschnitten bei jeder der Aufnahmen um eine vorgegebene erste Verzögerungsdauer verschieden ist, so dass unterschiedliche Lichtlaufzeiten entsprechend der ersten Verzögerungsdauer simuliert werden. Anschließend werden die wenigstens zwei TOF-Aufnahmen und die vorgegebene Verzögerungsdauer verwendet, um für wenigstens einen Teil der Pixel des Arrays jeweils eine lichtlaufzeitabhängigen Korrekturfunktion zu berechnen. Dafür werden zu den zu kalibrierenden Pixeln die Signale beider Aufnahmen in Beziehung gesetzt. Da die Szene sich zwischen den Aufnahmen nicht geändert hat, ist davon auszugehen, dass grundsätzlich dieselbe Lichtenergie von dem Pixelarray empfangen wurde. Der Unterschied liegt im Timing des Auftreffens der Intensität, so dass die Effekte des unterschiedlichen zeitlichen Verhaltens der elektronischen Komponenten (insbes. der Shutter) isoliert mit der Korrekturfunktion kompensiert werden können wodurch eine Kalibrierung herbeigeführt wird.

Die Erstellung der mehreren TOF-Aufnahmen erfolgt erfindungsgemäß innerhalb einer vorgegebenen Kalibrierungsdauer, die anwendungsabhängig zu wählen ist, jedoch üblicherweise Bruchteile einer Sekunde beträgt. Wesentlich ist, dass sich innerhalb der vorgegebenen Kalibrierungsdauer die Umgebung der Aufnahme im Betrachtungsbereich der TOF-Kamera nicht verändert.

Es ist im Rahmen der Erfindung dabei durchaus möglich, dass grundsätzlich jede der TOF-Aufnahmen eine Vielzahl von Ansteuerungen der Beleuchtungseinheit und des Pixelarrays umfassen kann. Eine einzelne Aufnahme bedient sich bei gängigen TOF-Kameras oft der Akkumulation von Ladungsmengen auf dem Pixelarray durch eine Folge von Lichtpulsen. Wesentlich ist jedoch, dass für jede dieser Aufnahmen die gleiche simulierte Lichtlaufzeit verwendet wird. Bei der zweiten der wenigstens zwei TOF-Aufnahmen können dann wieder eine Vielzahl von Pulsen und Detektionen verwendet werden, um eine finale TOF-Aufnahme zu erzeugen, für diese Aufnahme wird jedoch eine längere oder kürze Lichtlaufzeit simuliert, in dem beispielsweise die Aussendung der Lichtpulse um eine vorgegebene Verzögerungsdauer verzögert wird oder die Detektion verzögert oder vorgezogen wird oder sowohl die Aussendung als auch die Detektion zeitlich verändert werden, um die Verzögerungszeitdauer zu realisieren.

Die erfindungsgemäße Kalibrierung erlaubt die rasche Erfassung und Berechnung von Korrekturfunktionen, z.B. Korrekturfaktoren, ohne eine physische Abstandsänderung der Kamera vom aufzunehmenden Objekt durchführen zu müssen. Eine solche Kalibrierung kann im Betrieb regelmäßig oder bei Bedarf wiederholt werden, da keine gesonderte Handhabung der Kamera in einer Messumgebung erforderlich ist. Die Kalibrierung kann grundsätzlich abhängig gemacht werden von einer ausreichenden Beleuchtung der gesamten Szene, was durch eine Signalschwelle realisiert werden kann, unterhalb derer eine entsprechende Kalibrierung nicht durchgeführt wird.

In einer vorteilhaften Weiterbildung der Erfindung wird die Kalibrierungsdauer auf maximal eine Sekunde vorgegeben, vorzugsweise maximal 500 ms, besonders bevorzug maximal 50 ms.

Zwar kann grundsätzlich die Kalibrierungsdauer bei unveränderter Szenerie und Beleuchtungssituation auch länger gewählt werden, die rasche Erstellung von zwei Vergleichsaufnahmen mit unterschiedlichen Timing (wobei die Differenz der Verzögerungsdauer entspricht) stellt sicher, dass der Schaltungszustand und die Umgebungsbedingungen (Temperatur etc.) weitgehend identisch sind. Die Kalibrierungsdauer kann auch durchaus deutlich geringer gewählt werden, beispielsweise auf den zeitlichen Mindestabstand, der zur Umstellung der Timing-Parameter und zur Erfassung von zwei vollständigen TOF-Aufnahmen erforderlich ist.

Vorzugsweise wird die Verzögerungsdauer so gewählt, dass sie wenigstens eine Nanosekunde und höchstens 50 Nanosekunden beträgt.

Je nach Einsatzgebiet der zu kalibrierenden TOF-Kamera weist diese einen Auslegungsbereich bezüglich des Abstandes auf. Dieser Auslegungsbereich kann einige Zentimeter bis etliche Meter betragen. Wenn davon ausgegangen wird, dass Licht in einer Nanosekunde etwa 30 cm zurücklegt, so bedeutet eine Verzögerungsdauer von einer Nanosekunde eine simulierte Entfernungsänderung von circa 15 cm. Die Kalibrierung und die zugehörige Verzögerungsdauer ist darauf abzustimmen, mit welchen Abstandsvariationen im Praxisbetrieb der TOF-Kamera zu rechnen ist.

In einer bevorzugten Ausführungsform der Erfindung wird von dem Controller bei den unterschiedlichen TOF-Aufnahmen die zeitliche Ansteuerung der Beleuchtungseinheit verzögert oder vorgezogen, um die Verzögerungsdauer zwischen den TOF-Aufnahmen einzuhalten und die unterschiedlichen Abstände und Lichtlaufzeiten zu simulieren. In den meisten vorbereiten Schaltungen, die mit TOF-Kameras einsetzbar sind, ist eine Verzögerung für die Abgabe eines Lichtpulses einstellbar, so dass dieser Parameter nach einer ersten Aufnahme und vor Aufnahme der zweiten TOF-Aufnahme in einfacher Weise zu verändern ist.

Alternativ oder zusätzlich kann in einer bevorzugten Ausgestaltung stattdessen oder zusätzlich das Timing der Ansteuerung der Pixel des Pixelarrays variiert werden, so dass der zeitliche Abstand zwischen Beleuchtungspulsen und Erfassungsfenstern bei einer ersten TOF-Aufnahme um die Verzögerungsdauer von dem Zeitabstand zwischen Beleuchtungspulsen und Erfassungsdauer bei einer zweiten TOF-Aufnahme unterschieden ist. Dazu können insbesondere die Shutter mit einem geänderten Timing gegenüber der Aussendung des Lichtpulses angesteuert werden.

In einer Weiterbildung der Erfindung können weitere TOF-Aufnahmen mit weiteren abweichenden Verzögerungsdauern erfasst werden und weitere laufzeitabhängige Korrekturfaktoren berechnet werden. Auf diese Weise kann grundsätzlich auch eine ganze Serie von Korrekturfaktoren für unterschiedliche Lichtlaufzeiten erfasst und pixelspezifisch gespeichert werden, so dass die Kalibrierung entlang einer differenzierten Kurve für unterschiedliche Entfernungen möglich ist.

Die Erfindung wird nun anhand der beiliegenden Zeichnungen näher erläutert.
Figur 1 zeigt schematisch eine TOF-Kamera an zwei verschiedenen Positionen mit verschiedenen Abständen gegenüber einem Umgebungsobjekt gemäß dem Stand der Technik;
Figur 2 zeigt schematisch eine Timing-Darstellung der Abfolge von Lichtpulsen und Erfassung einer TOF-Kamera gemäß dem Stand der Technik;
Figur 3a zeigt ein Timing-Schema zur Aufnahme einer ersten TOF-Aufnahme gemäß einer Ausführungsform der Erfindung;
Figur 3b zeigt ein Timing-Schema zur Aufnahme einer zweiten TOF-Aufnahme gemäß einer Ausführungsform der Erfindung.
Figur 3c zeigt ein Timing-Schema zur Aufnahme beider TOF-Aufnahmen gemäß einer Ausführungsform der Erfindung.

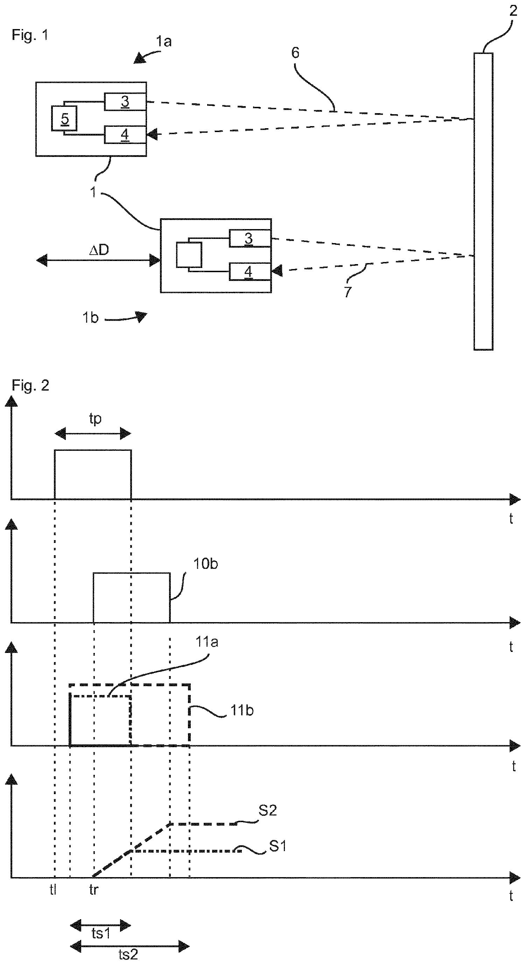

In Figur 1 ist schematisch eine TOF-Kamera 1 gezeigt, die vor einem Objekt 2 angeordnet ist. Das Bezugszeichen 1a bezeichnet die erste Position der TOF-Kamera mit einem ersten Abstand zu dem Objekt 2. Bezugszeichen 1b bezeichnet die Position der TOF-Kamera 1 in einem zweiten, geringeren Abstand zu dem Objekt 2. Der Unterschied der Abstände zwischen den Positionen 1a und 1b beträgt ΔD.

Die TOF-Kamera enthält eine Beleuchtungsquelle 3 ein Sensorarray 4 sowie einen Controller 5. Bei der Erstellung einer TOF-Aufnahme in der Position 1a wird ein Lichtpuls von der Beleuchtungseinrichtung 3 unter Steuerung des Controllers 5 entlang des Weges 6 auf das Objekt 2 abgegeben. Ein Teil der Lichtenergie wird reflektiert und gelangt zurück in das Pixelarray 4. Das Pixelarray 4 sensiert die Strahlungsenergie entsprechend eines von dem Controller 5 gesteuerten Zeitschemas durch einen oder mehrere Shutter, die synchronisiert angesteuert werden. Bei der Kamera der Position 1b gibt wiederum die Beleuchtungseinrichtung 3 einen Lichtpuls ab, dieser gelangt jedoch auf dem kürzeren Lichtweg 7 zum Objekt 2 und teilweise zurück in das Pixelarray 4. Zur Kalibrierung des Sensorarrays auf unterschiedliche Abstände werden gemäß diesem Schema nach dem Stand der Technik unterschiedliche Positionen 1a und 1b aufgenommen, wobei unterschiedliche Lichtwege 6 und 7 zurückgelegt werden und zu unterschiedlichen Signalen in dem Pixelarray 4 führen. Zusammen mit der Abstanddifferenz ΔD kann daraufhin eine Kalibrierung des Pixelarrays 4 vorgenommen werden. Zu allen oder einem Teil der Pixel des Pixelarrays können jeweils Korrekturfunktionen berechnet werden, um bei späteren Messungen abstandsabhängige Fehler zu kompensieren.

Figur 2 zeigt schematisch den Ablauf einer möglichen Erfassung und Auswertung der Lichtsignale zur Ermittlung der Abstandsinformationen in dem Pixelarray 4 gemäß dem Stand der Technik. Ein Lichtpuls mit der zeitlichen Erstreckung 10a wird zu einem Zeitpunkt tl und mit einer Dauer tp abgegeben.

Ein reflektierter Anteil 10b des Lichtpulses 10a erreicht das Pixelarray mit zum Zeitpunkt tr, wobei die Verzögerung (Differenz von tr und tl) abhängig von dem Abstand zu einem Objekt ist, von dem der reflektierte Anteil 10b zurückgeworfen wird.

In Synchronisation zu dieser Aussendung des Lichtpulses 10a steuert der Controller, der die Auslösung des Lichtpulses 10a durch eine Beleuchtungseinrichtung veranlasst hat, zwei Shutter 11a und 11b zur gleichzeitigen Öffnung an, wobei der Shutter 11a die Signale in einem Pixel für eine Zeitdauer ts1 akkumuliert und der zweite Shutter 11b die Signale für eine Zeitdauer ts2 akkumuliert.

In der unteren Darstellung der Grafenanordnung ist gezeigt, dass von den Shuttern 11a und 11b in den zugeordneten Messschaltungen einerseits ein Signale S1 bzw. S2 akkumuliert werden. Das zu Shutter 11b zugeordnete Signal S2 ist größer, da mehr Signalanteil des reflektierten Lichtpulses 10b akkumuliert wird, während der Shutter 11a nach der Shutter-Zeit ts1 wieder geschlossen hat. In Kenntnis der beiden Shutter-Zeiten und deren Zeitdifferenz kann aus dem Verhältnis von S2 zu S1 auf eine Entfernungsinformation geschlossen werden.

Es ist anzumerken, dass es unterschiedliche Arten der Pulsaussendung, Pulswiederholung und des Shutter-Timings gibt, die bei verschiedenen TOF-Kamerasystemen zum Einsatz kommen. Gleichbleibend bei diesen ist jedoch, dass gegenüber der zeitlichen Ansteuerung der Beleuchtung (oberes Koordinatensystem in Figur 2) gegenüber dem Timing der Erfassung (drittes Koordinatensystem von oben in Figur 2) eine Zeitbeziehung besteht. Gemäß der Erfindung wird diese Zeitbeziehung bei einer ersten TOF-Aufnahme anders gewählt als bei einer zweiten TOF-Aufnahme, nämlich variiert um eine Verzögerungsdauer.

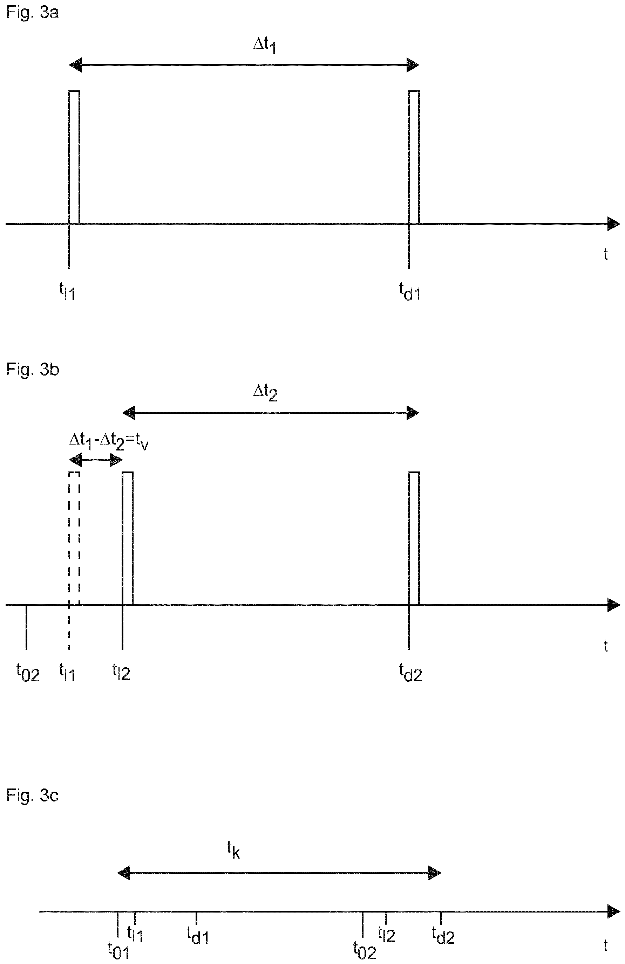

Figur 3a zeigt diesbezüglich ein entsprechendes Timing-Schema zur Aufnahme einer ersten TOF-Aufnahme in einer Ausführungsform der Erfindung. Startend bei einem Bezugszeitpunkt t₀ wird erfindungsgemäß zu einem Zeitpunkt t₁₁ die Abgabe eines Beleuchtungspulses angesteuert. Zu einem Detektionszeitpunkt t_{d1}, mit einem zeitlichen Abstand Δt₁ zu dem Zeitpunkt t₁₁ wird die Erfassung angesteuert (dieser zeitliche Abstand beträgt in diesem Beispiel zwischen 0 und 10 ns). Es ist zu beachten, dass diese Darstellung lediglich der Visualisierung dient. Je nach Betriebsart der TOF-Kamera kann die Erfassung auch bereits mit der Ansteuerung des Lichtpulses (Zeitpunkt t₁₁) oder sogar schon zuvor gestartet werden. Außerdem kann die Erfassung durch eine Folge von Shutter-Ansteuerungen erfolgen. Wesentlich ist jedoch, dass eine vorgegebene Zeitbeziehung zwischen der Aussendung des Lichtpulses und dem Erfassungsvorgang besteht.

Gemäß Figur 3b wird erfindungsgemäß eine zweite TOF-Aufnahme gestartet, wobei dann jedoch die Zeitbeziehung zwischen Beleuchtung und Detektion um eine Verzögerungsdauer tᵥ verändert ist. In diesem Fall wird der Lichtpuls von dem Controller zu einem verzögerten Zeitpunkt t₁₂ abgegeben, so dass die Zeitdifferenz zwischen Lichtpulsabgabe und Detektion nun den Wert Δt₂ hat. Die Differenz aus den Zeitverschiebungen bei der ersten TOF-Aufnahme (Figur 3a) und der zweiten TOF-Aufnahme (Figur 3b) ist die Verzögerungsdauer, beträgt in diesem Beispielfall tᵥ=Δt₁-Δt₂. In diesem Beispiel ist die Verzögerungsdauer durch eine controllerseitige Verzögerung der Ansteuerung der Beleuchtung realisiert, es kann jedoch auch eine Verzögerung oder ein Vorziehen der Detektion erfolgen. Wesentlich ist lediglich, dass die zeitliche Beziehung derart verändert wird, dass die zeitliche Differenz der Beziehung zwischen zwei TOF-Aufnahmen einer simulierten Lichtzeit und damit einer Entfernungsstrecke entspricht.

Das Pixelarray nimmt in beiden Fällen unterschiedliche Signale auf, nämlich als ob im Falle der Figur 3b, also bei verspäteter Abgabe des Lichtpulses, eine größere Distanz vom Lichtpuls zurückgelegt wurde. Die Verzögerung um die Verzögerungsdauer tᵥ simuliert gegenüber der Erfassungselektronik eine größere Distanz aufgrund verlängerter Lichtlaufzeit. Durch einen Vergleich der beiden TOF-Aufnahmen können insbesondere Timing-Effekte quantifiziert werden, die beispielsweise durch Shutter-Ansteuerungen hervorgerufen werden und pixelspezifisch entfernungsabhängige Korrekturen bei jedem Pixel erfordern.

Figur 3c zeigt die zeitliche Abfolge von Ereignissen der Figuren 3a und 3b innerhalb der Kalibrierungsdauer tₖ. Diese Kalibrierungsdauer tₖ beträgt in diesem Beispiel wenige Millisekunden.

Angesichts der Tatsache, dass beide Aufnahmen der Figuren 3a und 3b innerhalb der Kalibrierungsdauer im physischen Raum tatsächlich dieselbe Szene aufnehmen, ist grundsätzlich auch mit einer räumlich identischen Verteilung der Beleuchtungsintensität, jedoch zeitlich verschoben, zu rechnen. Dies ermöglicht es, tatsächlich die Timing-relevanten Korrekturen ohne Einfluss der Intensität durch diese Kalibrierung zu ermitteln und herauszurechnen.

Gemäß der Erfindung werden diese beiden TOF-Aufnahmen und die Signale jedes Pixels genutzt, um für jedes Pixel eine Korrekturfunktion oder einen Multiplikator oder Korrekturwert zu ermitteln. Sind also beispielsweise durch die Shutter und die unterschiedlichen Leitungslängen zu einzelnen Pixeln Timingspezifische Kalibrierungen bei Pixeln erforderlich, so ist dies über dieses Verfahren möglich.

Im Rahmen der Erfindung können weitere TOF-Aufnahmen mit anderen Timing-Schemata angesteuert werden, um weitere Korrekturwerte zu simulierten Entfernungen zu ermitteln.

Die Berechnung einer Korrekturfunktion kann durch Erstellung einer Linearfunktion erfolgen, die gegenüber einer Entfernungsänderung einen Korrekturfaktor berücksichtigt und verschiedenen Öffnungs- und Schließzeitpunkten eines Shutters Rechnung trägt. Eine solche Berechnung einer Korrekturfunktion kann mit einer einfachen Dreisatzrechnung erfolgen. Grundsätzlich kann allerdings auch bei einer Mehrzahl von TOF-Aufnahmen eine Korrekturtabelle mit interpolierten Werten angelegt werden, die bei der Auswertung der Signale pixelspezifisch herangezogen werden.

## Patentansprüche

1. Verfahren zum Betrieb einer Time-Of-Flight-Kamera (1), wobei die Kamera wenigstens eine Beleuchtungseinheit (3) und wenigstens ein für von der Beleuchtungseinheit ausgesandte Lichtpulse sensitives Pixelarray (4) zur Signalerfassung aufweist,
wobei ein Controller (5) mit der Beleuchtungseinheit (3) gekoppelt ist, um diese zur Aussendung von Lichtpulsen anzusteuern,
wobei der Controller (5) mit dem Pixelarray (4) gekoppelt ist um das Pixelarray zeitlich synchronisiert zu dem Beleuchtungspuls zur Messung in einem oder mehreren vorgegebenen Zeitabschnitten anzusteuern,
so dass ein von der Beleuchtungseinheit abgegebener Lichtpuls in der Umgebung (2) der Time-of-Flight Kamera (1) reflektiert wird und im Pixelarray erfasst wird und von der Lichtlaufzeit abhängige Signale in den Pixeln des Pixelarrays (4) erzeugt werden, wenn das reflektierte Licht das Pixelarray in einem der vorgegebenen Zeitabschnitte erreicht,
wobei zur Erfassung einer TOF-Aufnahme einmal oder mehrmals ein Ansteuern der Beleuchtungseinheit (3) und des Pixelarrays (4) durch den Controller (5) mit gleichartiger zeitlicher Synchronisation erfolgt und in den Pixeln des Pixelarrays jeweils jedem Pixel zugeordnete Messwerte erzeugt werden,
**gekennzeichnet durch** die Schritte:
Erfassen von wenigstens zwei TOF-Aufnahmen innerhalb einer vorgegebenen Kalibrierungsdauer (tₖ), wobei die TOF-Aufnahmen mit jeweils unterschiedlicher Synchronisation der Beleuchtungseinheit (3) und des Pixelarrays (4) derart erfolgen, dass der zeitliche Abstand (Δt₁, Δt₂) zwischen der Aussendung des Lichtpulses und den vorgegebenen Zeitabschnitten bei jeder der Aufnahmen um eine vorgegebene erste Verzögerungsdauer (tᵥ) verschieden ist, so dass der ersten Verzögerungsdauer entsprechende unterschiedliche Lichtlaufzeiten simuliert werden,
wobei die wenigstens zwei TOF-Aufnahmen und die erste Verzögerungsdauer verwendet werden, um für wenigstens einen Teil der Pixel des Pixelarrays jeweils einen lichtlaufzeitabhängigen Korrekturfaktor zu berechnen.

2. Verfahren nach Anspruch 1, wobei die Kalibrierungsdauer (tₖ) maximal 1 Sekunde, vorzugsweise maximal 500ms beträgt.

3. Verfahren nach Anspruch 1 oder 2, wobei die erste Verzögerungsdauer (tᵥ) wenigstens 1 Nanosekunde und höchstens 50 Nanosekunden beträgt.

4. Verfahren nach einem der vorangehenden Ansprüche, wobei der Controller zur Einhaltung der Verzögerungsdauer (tᵥ) die zeitliche Ansteuerung der Beleuchtungseinheit zwischen den TOF-Aufnahmen um die Verzögerungsdauer (tᵥ) verändert.

5. Verfahren nach einem der vorangehenden Ansprüche, wobei der Controller zur Einhaltung der Verzögerungsdauer(tᵥ) die zeitliche Ansteuerung des Pixelarrays zwischen den TOF-Aufnahmen um die Verzögerungsdauer (tᵥ) verändert.

6. Verfahren nach einem der vorangehenden Ansprüche, wobei weitere TOF-Aufnahmen von der ersten Verzögerungsdauer (tᵥ) abweichenden weiteren Verzögerungsdauern erfasst werden und für wenigstens einen Teil der Pixel des Pixelarrays jeweils weitere lichtlaufzeitabhängigen Korrekturfaktor berechnet werden.
